# EUROPEAN PATENT SPECIFICATION

(11) **EP 4 197 866 B1**
(45) Date of publication and mention of the grant of the patent: **16.07.2025**
(21) Application number: 22209374.2
(22) Date of filing: 24.11.2022
(51) Int. Cl.: B60T 8/17, B60T 8/1755, B60T 8/24

(54) **STABILITY CONTROL OF A TUGGER TRAIN**
STABILITÄTSKONTROLLE EINES ROUTENZUGS
CONTRÔLE DE LA STABILITÉ D'UN TRAIN DE REMORQUEUR

(30) Priority: 16.12.2021 IT 202100031574
(43) Date of publication of application: 21.06.2023
(73) Proprietor: Toyota Material Handling Manufacturing Italy S.p.A, 40132 Bologna (IT)
(72) Inventor: Giovannucci, Monica, 40132 Bologna (IT); Pesso, Tommaso, 40132 Bologna (IT)
(74) Representative: Hoffmann Eitle

(56) References cited:
- EP-A1- 3 613 652
- EP-A2- 2 801 489
- WO-A1-2007/008150
- DE-A1- 102009 011 907
- DE-A1- 19 964 058
- US-A1- 2005 222 727

## Description

### TECHNICAL FIELD OF THE INVENTION

The field of the present invention relates to a tugger train including a towing vehicle (or tractor) and a plurality of trailer (or semitrailer); in particular, the invention relates to a stability control of the tugger train.

### BACKGROUND OF THE INVENTION

Tugger trains including a towing tractor (or vehicle) towing a sequence of trailers is known in the art, e.g. for use in an industrial site and/or on a logistic site for transporting ware. The trailers are connected in articulated manner with each other in sequence, wherein the first trailer is connected in an articulated manner to the towing tractor. Tugger trains can be equipped with autonomous or semi-autonomous towing vehicles. It has been considered to equip the towing vehicle with a stability control system to avoid dangerous situations in which, for example, the towing vehicle may slip; the problem of instability of the tugger train is particularly felt in case the trailers are not provided with an independent braking system, or when the braking system of the trailers is not sufficient to prevent a "jack-knife" phenomenon. In this context, it is known the so-called phenomenon "jack-knife", wherein a truck with at least two separate parts (e.g. a tractor and one or more trailers) folds in on itself at the point of separation. The tractor and the trailer swivel where they are linked together, forming a 90-degree angle "V" shape. This hinging effect closely resembles the effect of pocketknife blade folding into its handle while closing. Under these circumstances, the rear axle of the towing tractor may lose adherence to the soil, thus causing a skid of the tractor with subsequent rotation of the tractor, also due to the inertia of the trailers. This phenomenon may in particular occur during braking, in a curve or downhill.

In the known art, there are no systems capable of ensuring a high degree of safety and stability in the operation of a tugger train including one or more trailers, especially in case the trailers are not equipped with a braking system; more particularly, there is a problem of ensuring stability of the tugger train during braking while steering and/or driving downhill. Accordingly, a high degree of safety has not been achieved so far under a wide range of operational conditions of the tugger train.

DE 199 64 058 A1 relates to a dynamic stabilization device for vehicle tractor-trailer combination, that uses controlled automatic braking of trailer

### SUMMARY OF THE INVENTION

In view of the above, it is an object of the present invention to provide a tugger train capable of achieving a high degree of stability under a wide range of operating circumstances; in particular, it is an object of the invention to enhance stability of the tugger train in case of trailers without braking system are provided. It is an object of the invention to improve stability of the tugger train in case of braking by the towing tractor while steering and/or driving downhill. It is an object of the invention to prevent the "jack-knife" phenomenon of the tugger train, e.g. in case of abrupt braking.

In view of the above objects, the present invention proposes a tugger train as defined by claim 1. In an aspect, the tugger train comprises a towing tractor and a plurality of trailers connected to the towing tractor in an articulated manner for carrying loads, including:
- a speed sensor for detecting a speed of the towing tractor,
- a steering angle sensor for detecting a steering angle of the towing tractor,
- acquiring means for acquiring information relating to a weight of a load carried by one or more of the plurality of trailers, and
- a control unit configured to perform a stability control by imposing a limitation to the speed of the towing tractor based on an analysis of the speed of the towing tractor detected by the speed sensor, the steering angle of the towing tractor detected by the steering angle sensor and the information relating to a weight acquired by the acquiring means.

Thanks to the presence of acquiring means configured to acquire the information relating to a weight towed by the towing tractor, the control unit can properly perform a stability control taking into account, in addition to the speed and the steering angle of the towing tractor, also the towed mass, thereby achieving an enhanced stability control. **In** fact, it was found that the towed mass may influence the behaviour of the tugger train, especially when braking while steering, thereby influencing the stability of the whole system. Specifically, the stability control of the present invention allows to prevent the jack-knife phenomenon while ensuring that the operation of the tugger train are limited only when appropriate and necessary.

In a preferred embodiment, the towing tractor further includes an inclination sensor for detecting the inclination of the towing tractor with respect to an horizontal plane, wherein the control unit is configured to perform the stability control by imposing the limitation to the speed of the towing tractor based also on the inclination of the towing tractor sensed by the inclination sensor. This further achieves a most improved stability control, since the inclination of the towing tractor may also influence the dynamic behaviour of the tugger train while braking, especially when driving downhill; hence, considering in conjunction the towed mass and the towing tractor inclination enables an improved stability control.

In a preferred embodiment, the control unit is further configured to perform the stability control by imposing a limitation of the steering angle of the towing tractor. Since, in addition to the speed, also the steering angle is limited, safety of operation is further improved by better preventing an operating circumstance of danger, especially when braking in a curve.

In a preferred embodiment, the control unit is configured to impose the limitation to the steering angle by activating opposing means configured to generate a torque opposing a rotation of a steering wheel commanded by a user. Accordingly, the steering angle can be limited and the user may realize the danger by sensing a different resistance to the rotation of the steering wheel.

In a preferred embodiment, the control unit is configured to calculate, based on the information relating to a weight acquired by the acquiring means and/or the inclination detected by the inclination sensor, an instability curve representing a maximum towing tractor speed as a function of a current steering angle of the towing tractor. By means of the stability curve, the control unit is in the position to efficiently monitor the dynamic behaviour and the associated risk of reaching an unstable operating circumstance.

In a preferred embodiment, the control unit is configured to impose a limitation to the towing tractor speed and/or to the steering angle when current operational data representing the truck speed and the truck steering angle approach the instability curve of a distance lower than a predetermined threshold. Accordingly, stability control can be performed at the proper time to avoid dangerous situations.

In a preferred embodiment, the acquiring means include a weight input interface and are configured to acquire the information relating to a weight by receiving a weight indication inputted by a user of the towing tractor by means of the weight input interface. Accordingly, the tugger train can derive an indication of a total mass to be towed or the entity of the load carried by the trailers at the beginning of the operation.

In a preferred embodiment, the acquiring means are configured to acquire the information relating to a weight by reading a predefined total weight stored in a memory of the towing tractor, when no weight indication is inputted by the user via the input interface upon starting the towing truck. Accordingly, even if the user is not aware or forgets to input the information relating to the towed weight, the stability control can perform a stability control on the basis of a conservative value of the towed mass. For example, in case no weight input is provided by the user, a value of the total weight is set to the maximum weight of the trailers and of the respective loads.

In a preferred embodiment, the control unit is configured to perform a stability control by imposing a upper limit to the speed of the towing tractor, wherein the upper limit increases when a total weight of the plurality of trailers and of the respective carried loads derived based on the information acquired by the acquiring means increases. As it was found that the instability of the towing tractor is mainly caused by the transfer of the load from the rear axle to the front axle of the towing tractor, it was found that the entity of the towed mass may improve the stability of the tugger train during braking by increasing the adherence of the rear axle of the towing tractor, due to the forces transmitted by the trailers to the towing tractor by means of the articulated connection. Accordingly, the maximum speed limit may be increased when the towed mass increases.

According to a further aspect, a towing tractor is provided configured to be used in a tugger train to tow a plurality of trailers connected in an articulated manner in sequence to the towing tractor for carrying loads, the towing tractor including:
- a speed sensor for detecting a speed of the towing tractor,
- a steering angle sensor for detecting a steering angle of the towing tractor,
- acquiring means for acquiring information relating to a weight of a load carried by one or more of the plurality of trailers, and
- a control unit configured to perform a stability control by imposing a limitation to the speed of the towing tractor based on an analysis of the speed of the towing tractor detected by the speed sensor, the steering angle of the towing tractor detected by the steering angle sensor and the information relating to a weight acquired by the acquiring means,
wherein the towing tractor further includes an inclination sensor for detecting the inclination of the towing tractor with respect to an horizontal plane, wherein the control unit is configured to perform the stability control by imposing the limitation to the speed of the towing tractor based also on the inclination of the towing tractor sensed by the inclination sensor.

### BRIEF DESCRIPTION OF THE DRAWINGS

The above and other advantages of the present invention will be illustrated with reference to example embodiments of the invention, described with reference to the appended drawings listed as follows.
Fig. 1 shows a schematic view of a tugger train;
Fig. 2 shows a functional scheme of a control unit of the towing tractor and of the associated devices;
Fig. 3 shows two illustrative examples of stability curves correlating the speed and the steering angle of the towing tractor, corresponding to different towed weights;
Fig. 4 shows a schematic view of a possible implementation of a control unit of the towing vehicle.

### DETAILED DESCRIPTION OF THE PREFERRED EMBODIMENTS

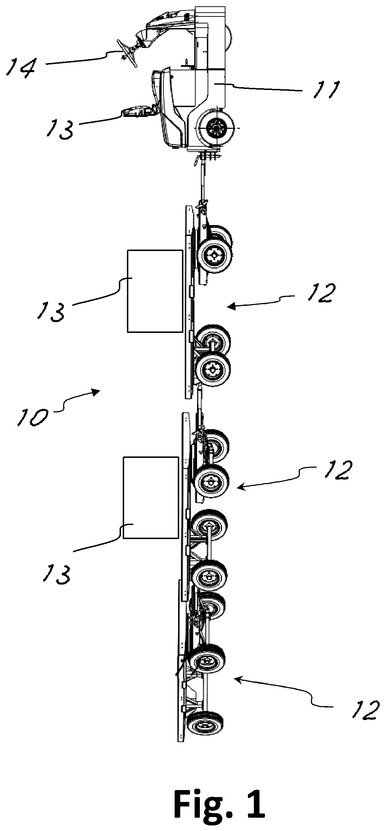

Figure 1 shows a view of a tugger train 10 including a towing vehicle (tractor) 11 and a plurality of trailer (or semi-trailers) 12 connected to the towing tractor 11 in an articulated manner. The tugger train 10 may be either for use e.g. in industrial sites or in a logistic site. Each trailer 12 is connected by means of an articulation having a vertical pivot for forming an articulated system with an adjacent trailer 12 or with the towing tractor 11. Specifically, a first one of the trailers 12 is connected to the towing tractor 11, while the subsequent trailers 12 are connected in sequence with a preceding trailer 12 as shown in the figure. In the illustrated example, three trailers 12 are connected to the towing tractor 11, however also other numbers of trailers could be connected to the towing tractor 11, e.g. even one single trailer 12 could be connected to the towing tractor 11.

The towing tractor 11 may be autonomous (i.e. driverless) or semi-autonomous; alternatively, the towing vehicle 11 may be a traditional vehicle configured to be driven by a human operator. The towing tractor 11 may include a user seat 13 and a steering wheel 14. The towing vehicle 11 may be a four-wheeled vehicle, but may also have a different number of wheels, e.g. three wheels. The trailers 12 can be realized as a wheeled vehicle without a traction motor. One or more of the trailers 12 may not include a independent braking system. In one embodiment, all trailers 12 do not include an independent braking system. One or more, or all, of the trailers 12 may not include a braking system mounted on board of the trailer and acting directly on their wheels; in other words, one or more, or all, of the trailers 12 may be braked only thanks to the forces transmitted by the articulated joint between the towing tractor and the trailers. The trailers 12 can have e.g. four wheels as shown in the drawings. The trailers 12 may be realized according to known techniques in the art; e.g. the trailer might have a front axle that is rotatable around a vertical axis with respect to the frame of the trailer 12, while the rear axle may be fixed with respect to the frame. However, other configurations may be possible. In fig. 1, loads carried by the trailers 12 are referenced with number 13.

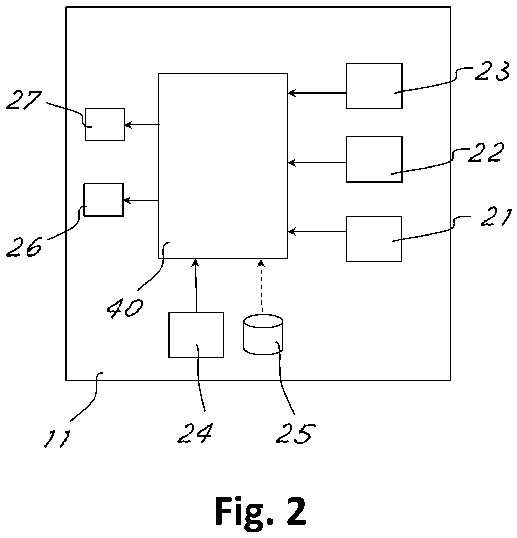

The tugger train 10 includes a control unit 40 (shown in figure 2), preferably mounted (or included) in the towing tractor 11. The control unit 40 cooperates with sensing devices and actuators of the tugger train 10 (preferably included on the towing tractor 11) to perform a stability control according to the invention. More in details, the towing tractor 11 includes, or may be associated to, a speed sensor 21 for detecting a speed of the towing tractor. The towing tractor 11 further includes, or may be associated to, a steering angle sensor 22 for detecting a steering angle of the towing tractor. The speed sensor 21 and the steering angle sensor 22 may be realized according to any known art, e.g. including an encoder associated to the tractor wheels and to the steering mechanism of the tractor 11. The towing tractor 11 may also include, or by associated to, acquiring means for acquiring information relating to a weight of a load carried by one or more of the plurality of trailers 12. The information relating to a weight of a load carried by one or more of the plurality of trailers 12 may correspond to a total weight of the plurality of trailers and of the respective carried loads; alternatively, the information relating to a weight of a load carried by one or more of the plurality of trailers 12 may correspond to the total load carried by all trailers 12; alternatively, the information relating to a weight of a load carried by one or more of the plurality of trailers 12 may correspond to the load carried by one trailer 12. The control unit 40 may be configured to derive the total weight of the towed mass (i.e. the weight of the trailers and of the respective loads) based on the information on a weight acquired by the acquiring means.

The control unit 40 is preferably connected to a one or more actuating means 26, 27 configured to impose a limitation to the operation of the towing tractor, e.g. a braking system 26 and/or opposing means 27 configured to generate a torque opposing a rotation of a steering wheel commanded by a user. The control unit 40 may be coupled to and control the drive system of the towing tractor, e.g. an electrical drive motor of the towing tractor 11. The control unit 40 may be configured to impose a limitation to the speed of the towing tractor 11 by means of a control of the drive system of the towing tractor 11.

Advantageously, the means for acquiring the information relating to a weight may include a user interface 24 that is capable to receive an input from a user. The input to the user interface may correspond to the information relating to the total towed mass; the input to the user interface may correspond to the total weight carried by all trailers 12 or to the total weight of the loads and of the trailers 12. The user interface may include e.g. a touchscreen, a keypad or the like.

The control unit 40 is configured to perform a stability control by imposing a limitation to the speed of the towing tractor 11 based on an analysis of the speed of the towing tractor detected by the speed sensor 21, the steering angle of the towing tractor detected by the steering angle sensor 22 and the information relating to a weight acquired by the acquiring means 24, 25. Based on the acquired information relating to a weight, the control unit 40 may obtain the total amount of the mass towed by the towing tractor 11. In turn, based on the tractor speed, the tractor steering angle and the total amount of the mass towed by the towing tractor 11, the control unit 40 may calculate a maximum speed allowed under the current operating circumstances (e.g. speed and steering angle of the towing tractor) to maintain stability. If the sensed speed of the towing tractor 11 reaches the maximum allowed speed, the control unit 40 advantageously imposes a limit to the speed of the towing tractor, e.g. by activating a braking system 26. The calculation of the maximum allowed speed may be periodically repeated in order to control the stability over time during the operation of the tugger train. Accordingly, the control unit may periodically check whether the current speed reaches the maximum allowed speed after recalculation of the maximum allowed speed. The period of recalculation of the maximum speed may be lower, e.g., than 1 s.

In a preferred embodiment, the towing tractor 11 further includes an inclination sensor 23 for detecting the inclination of the towing tractor 11 with respect to a horizontal plane. The control unit 40 is configured to perform the stability control by imposing the limitation to the speed of the towing tractor 11 based also on the inclination of the towing tractor sensed by the inclination sensor 23. In this case, the calculation of the maximum allowed speed is based also on the inclination of the towing tractor, in addition to the information relating to a weight, thereby achieving a more accurate control of the stability. Also in this case, the recalculation of the maximum allowed speed may be periodic, as above described.

In a further preferred embodiment, the control unit 40 is configured to perform the stability control by imposing a limitation of the steering angle of the towing tractor 11. Accordingly, when a situation of potential instability is approached, e.g. in case the current speed reaches the threshold of the maximum allowed speed, the control unit 40 may act on an actuator 27 to impose a limitation to the steering angle of the towing tractor. For example, the control unit 40 may be advantageously configured to impose the limitation to the steering angle by activating opposing means 27 configured to generate a torque opposing a rotation of the steering wheel 14 commanded by a user. The opposing means 27 may be realized e.g. by means of an electromagnetic clutch acting of the shaft of the steering mechanism, or any other known system for limiting the steering angle of a vehicle. Alternatively, the steering angle may be limited by activating means for vibrating the steering wheel, so as to provide the user with an indication to interrupt the steering action.

In a preferred embodiment, the control unit 40 is configured to calculate, based on the information relating to a weight acquired by the acquiring means 24, 25 and/or the inclination detected by the inclination sensor 23, an instability curve representing a maximum towing tractor speed as a function of a current steering angle of the towing tractor 11.

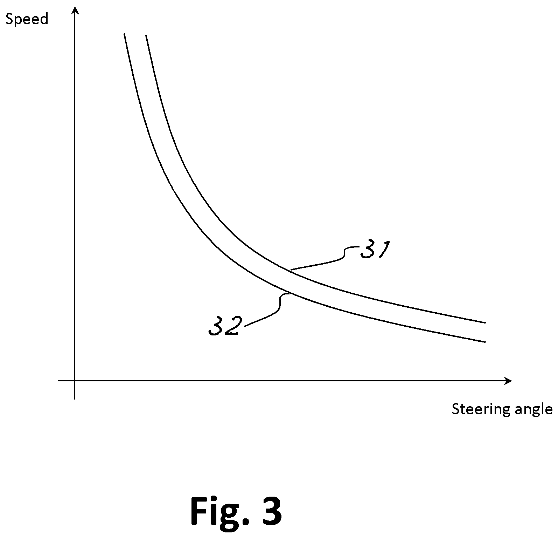

Fig. 3 shows illustrative examples of the shape of stability curves 31, 32 according to the present invention. In the example in fig. 3, curve 31 may correspond to a situation in which the towed mass (i.e. the load on the trailers 12) is the maximum allowed towed mass (i.e. the maximum load that the trailers 12 can carry), while curve 32 may correspond to a situation in which no load is carried by the trailers 12. The area above the curve corresponds to an unstable condition of the tugger train, while the area below the curve correspond to a stable condition. The control unit 40 may be preferably configured to impose a limitation to the towing tractor speed and/or to the steering angle of the towing tractor 11 when current operational data representing the tractor speed and the tractor steering angle approach the instability curve 31,32 of a distance lower than a predetermined threshold. Accordingly, the instability condition may be safely prevented.

In a preferred embodiment, the control unit 40 is configured to perform a stability control by imposing a upper limit to the speed of the towing tractor 11, wherein the upper limit increases when the total weight of the plurality of trailers 12 and of the respective carried loads 13 derived based on the information acquired by the acquiring means 24, 25 increases. This is illustrated by the two curves 31, 32, in which the curve 31 relating to the case of maximum towed mass is above the curve 32 relating to the case of no load on the trailers. In fact, it was found that the load on the trailers contribute to increase the stability of the tugger train (and in particular of the towing tractor), while braking in a curve, since the weight of the trailer contributes to avoid the transfer of the load from the rear axle to the front axle of the towing tractor, thereby reducing the risk of slipping of the towing tractor. In fact, it was found that a main cause of instability and loss of control of the towing tractor is the transfer of the load from the rear to the front axle of the towing tractor, this leading to a loss of adherence of the rear wheels of the towing tractor. The force transmitted by the trailers 12 to the towing tractor 11 through the articulated connection, e.g. during braking, contributes to increase the load on the rear axle of the tractor 11 thereby improving the behaviour of the rear axle in terms of adherence to the ground, so that the maximum allowed speed may be increased in case of higher load on the trailers 12.

As above described, in a preferred embodiment, the acquiring means include a weight input interface 24 that can be used by the user of the tugger train 10 to input the information relating to a weight carried by the trailers 12, e.g. the total weight of the trailers and of the load on the trailers. The acquiring means are then configured to acquire the information relating to a weight of towed mass by receiving a weight indication inputted by a user of the towing tractor by means of the weight input interface 24. Preferably, the weight input interface includes a display, e.g. a touchscreen; the control unit 40 may be configured, when the towing tractor 11 is switched on, to cause the display to display a notification indicating to the user that an input of information relating to a weight of towed mass is required. Preferably, when no weight indication is inputted by the user via the input interface 24 upon starting the towing truck, the acquiring means are configured to acquire the information relating to the total weight by reading a predefined total weight stored in a memory 25 of the towing tractor 11. The predefined total weight stored in the memory 25 may be set to be the maximum amount of towed mass allowed for the tugger train, i.e. the maximum mass that the towing tractor can tow. Accordingly, a highest level of safety may be ensured. For example, the control unit 40 may acquire the predefined total weight stored in the memory 25 as the information relating to a weight, if the weight user interface 24 does not receive any input from the user relating to the weight after the expiration of timer started upon switching on the towing tractor 11. Alternatively, the control unit 40 may acquire the predefined total weight stored in the memory 25 as the information relating to a weight if no input is received at the weight user interface 24 in the time between switching on the towing tractor and the time in which the towing tractor starts to move. In one alternative embodiment, the weight user interface 24 may be configured to receive as input the number of trailers 12 connected to the towing tractor and/or the weight of the load carried by the each of the trailer 12 connected directly to the towing tractor 11. When the control unit 40 acquires the predefined total weight stored in the memory 25 as the information relating to a weight, the control unit 40 may be configured to cause the display to stop displaying the notification indicating to the user that an input of information relating to a weight of a load carried by one or more of the plurality of trailers is required.

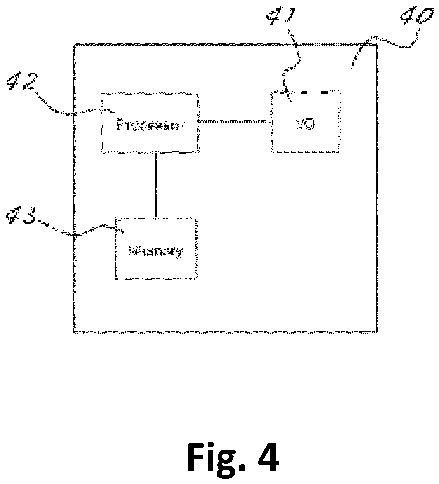

Fig. 4 shows a possible implementation of the control unit 40 of the tugger train 10, e.g. mounted on the towing tractor 11. In an embodiment, the control unit 40 includes a processor 42, a memory 43 and a I/O interface 41. The processor 42 is configured to execute a control software stored on the memory 43 to execute any of the functions of the control unit 40 as above described. When executing the control software, the processor 42 receives as input the information from the sensors 21-23 of the towing vehicle and/or information received by means of the I/O interface 41 and output control signals to the actuators 26, 27 of the towing vehicle using the I/O interface 41 as well. The I/O interface 41 is also communicably connected to the input interface 24 to receive the information relating to a weight. The I/O interface 41 may be also communicably connected to user interface 24 of the towing vehicle 11 to receive other inputs from the user and to output alerts or other information relating to the current status of the towing vehicle. Also other possible implementations of the control unit 40 can be conceived, e.g. including a plurality of distributed processors or the like.

According to a further aspect, a towing tractor is provided configured to be used in a tugger train to tow a plurality of trailers connected in an articulated manner in sequence to the towing tractor for carrying loads, wherein the towing tractor includes:
- a speed sensor for detecting a speed of the towing tractor,
- a steering angle sensor for detecting a steering angle of the towing tractor,
- acquiring means for acquiring information relating to a weight carried by one or more of the plurality of trailers, and
- a control unit configured to perform a stability control by imposing a limitation to the speed of the towing tractor based on an analysis of the speed of the towing tractor detected by the speed sensor, the steering angle of the towing tractor detected by the steering angle sensor and the information relating to a weight acquired by the acquiring means. In fact, the towing tractor may be also provided separately from the plurality of trailers and be connected to the trailers by a final user on site. The above towing tractor may include any of the features above disclosed with reference to the towing tractor 11.

The above description of embodiments applying the innovative principles of the invention is provided solely for the purpose of illustrating said principles and must thus not be considered as limiting the scope of the invention claimed herein.

## Claims

1. A tugger train (10) comprising a towing tractor (11) and a plurality of trailers (12) connected to the towing tractor (11) in an articulated manner for carrying loads, including:
- a speed sensor (21) for detecting a speed of the towing tractor,
- a steering angle sensor (22) for detecting a steering angle of the towing tractor,
- acquiring means (24, 25) for acquiring information relating to a weight of a load carried by one or more of the plurality of trailers, and
- a control unit (40) configured to perform a stability control by imposing a limitation to the speed of the towing tractor (11) based on an analysis of the speed of the towing tractor detected by the speed sensor (21), the steering angle of the towing tractor detected by the steering angle sensor (22) and the information relating to a weight acquired by the acquiring means (24, 25),
**characterized in that** the acquiring means include a weight input interface (24) and are configured to acquire the information relating to a weight by receiving a weight indication inputted by a user of the towing tractor by means of the weight input interface (24),
wherein the control unit (40) is configured to acquire a predefined total weight stored in a memory (25) as the information relating to a weight, if the weight user interface (24) does not receive any input from the user relating to the weight after the expiration of timer started upon switching on the towing tractor (11) or if no input is received at the weight user interface (24) in the time between switching on the towing tractor and the time in which the towing tractor starts to move.

2. A tugger train (10) according to claim 1, wherein the towing tractor (11) further includes an inclination sensor (23) for detecting the inclination of the towing tractor with respect to a horizontal plane, wherein the control unit (40) is configured to perform the stability control by imposing the limitation to the speed of the towing tractor (11) based also on the inclination of the towing tractor sensed by the inclination sensor (23).

3. A tugger train (10) according to claims 1 or 2, wherein the control unit (40) is further configured to perform the stability control by imposing a limitation of the steering angle of the towing tractor.

4. A tugger train (10) according to claim 3, wherein the control unit (40) is configured to impose the limitation to the steering angle by activating opposing means (27) configured to generate a torque opposing a rotation of a steering wheel commanded by a user or by activating means for vibrating the steering wheel.

5. A tugger train according to claims 1, 2 or 3, wherein the control unit is configured to calculate, based on the information relating to a weight acquired by the acquiring means (24, 25) and/or the inclination detected by the inclination sensor (23), an instability curve (31, 32) representing a maximum towing tractor speed as a function of a current steering angle of the towing tractor.

6. A tugger train (10) according to claim 5, wherein the control unit is configured to impose a limitation to the towing tractor speed and/or to the steering angle of the towing tractor when current operational data representing the towing tractor speed and the towing tractor steering angle approach the instability curve of a distance lower than a predetermined threshold.

7. A tugger train according to any of the preceding claims, wherein the control unit (40) is configured to perform a stability control by imposing an upper limit to the speed of the towing tractor (11), wherein the upper limit increases when a total weight of the plurality of trailers (12) and of the respective carried loads (13) derived based on the information acquired by the acquiring means (24) increases.

8. A tugger train according to any of the preceding claims, wherein one or more of the trailers (12) do not include a braking system mounted on board of the trailer.

9. A tugger train according to claim 8, wherein the control unit (40) is coupled to and configured to control a drive system of the towing tractor (11), wherein the control unit (40) is configured to impose the limitation to the speed of the towing tractor (11) by means of a control of the drive system of the towing tractor.

10. A tugger train according to any of claims 9-10, wherein the control unit (40) is coupled to and configured to control a braking system (26) of the towing tractor (11), wherein the control unit (40) is configured to impose the limitation to the speed of the towing tractor (11) by activating the braking system of the towing tractor.

11. A tugger train according to any of claims 1-10, wherein the weight input interface (24) includes a display; wherein the control unit (40) is configured, when the towing tractor is switched on, to cause the display to display a notification indicating to the user that an input of information relating to a weight of a load carried by one or more of the plurality of trailers is required.

12. A tugger train according to claim 11, wherein, when the control unit (40) acquires the predefined total weight stored in the memory (25) as the information relating to a weight, the control unit (40) is configured to cause the display to stop displaying the notification indicating to the user that an input of information relating to a weight of a load carried by one or more of the plurality of trailers is required.

## Patentansprüche

1. Routenzug (10), umfassend eine Zugmaschine (11) und eine Vielzahl von Anhängern (12), die mit der Zugmaschine (11) zum Tragen von Lasten in gelenkiger Weise verbunden sind, einschließend:
- einen Geschwindigkeitssensor (21) zum Erfassen einer Geschwindigkeit der Zugmaschine,
- einen Lenkwinkelsensor (22) zum Erfassen eines Lenkwinkels der Zugmaschine,
- Erfassungsmittel (24, 25) zum Erfassen von Informationen über ein Gewicht einer von einem oder einer Vielzahl von Anhängern getragenen Last, und
- eine Steuereinheit (40), die so konfiguriert ist, dass sie eine Stabilitätskontrolle durchführt, indem sie eine Begrenzung der Geschwindigkeit der Zugmaschine (11) auf der Grundlage einer Analyse der vom Geschwindigkeitssensor (21) erfassten Geschwindigkeit der Zugmaschine, des vom Lenkwinkelsensor (22) erfassten Lenkwinkels der Zugmaschine und der von den Erfassungsmitteln (24, 25) erfassten Informationen über ein Gewicht auferlegt,
**dadurch gekennzeichnet, dass** die Erfassungsmittel eine Gewichtseingabeschnittstelle (24) einschließen und so konfiguriert sind, dass sie die Informationen über ein Gewicht erfassen, indem sie eine Gewichtsangabe empfangen, die von einem Benutzer der Zugmaschine mittels der Gewichtseingabeschnittstelle (24) eingegeben wird,
wobei die Steuereinheit (40) so konfiguriert ist, dass sie ein vordefiniertes Gesamtgewicht, das in einem Speicher (25) gespeichert ist, als die sich auf ein Gewicht beziehende Informationen erfasst, wenn die Gewichtsbenutzerschnittstelle (24) keine sich auf das Gewicht beziehende Eingabe von dem Benutzer erhält, nach dem Ablauf des beim Einschalten der Zugmaschine (11) gestarteten Timers oder wenn in der Zeit zwischen Einschalten der Zugmaschine und dem Zeitpunkt, zu dem die Zugmaschine losfährt, keine Eingabe an der Gewichtsbenutzerschnittstelle (24) erfolgt.

2. Routenzug (10) nach Anspruch 1, wobei die Zugmaschine (11) weiter einen Neigungssensor (23) zum Erfassen der Neigung der Zugmaschine in Bezug auf eine horizontale Ebene einschließt, wobei die Steuereinheit (40) so konfiguriert ist, dass sie die Stabilitätskontrolle durch Auferlegen der Begrenzung der Geschwindigkeit der Zugmaschine (11) auch auf der Grundlage der vom Neigungssensor (23) erfassten Neigung der Zugmaschine durchführt.

3. Routenzug (10) nach Anspruch 1 oder 2, wobei die Steuereinheit (40) weiter so konfiguriert ist, dass sie die Stabilitätskontrolle durch Auferlegen einer Begrenzung des Lenkwinkels der Zugmaschine durchführt.

4. Routenzug (10) nach Anspruch 3, wobei die Steuereinheit (40) so konfiguriert ist, dass sie die Begrenzung des Lenkwinkels durch Aktivieren von Gegenmitteln (27), die so konfiguriert sind, dass sie ein Drehmoment erzeugen, das einer von einem Benutzer befohlenen Drehung eines Lenkrads entgegenwirkt, oder durch Aktivieren von Mitteln zum Vibrieren des Lenkrads, auferlegt.

5. Routenzug nach einem der Ansprüche 1, 2 oder 3, wobei die Steuereinheit so konfiguriert ist, dass sie auf der Grundlage der von den Erfassungsmitteln (24, 25) erfassten Informationen über ein Gewicht und/oder der von dem Neigungssensor (23) erfassten Neigung eine Instabilitätskurve (31, 32) berechnet, die eine maximale Zugmaschinengeschwindigkeit als eine Funktion eines aktuellen Lenkwinkels der Zugmaschine darstellt.

6. Routenzug (10) nach Anspruch 5, wobei die Steuereinheit so konfiguriert ist, dass sie eine Begrenzung der Geschwindigkeit der Zugmaschine und/oder des Lenkwinkels der Zugmaschine auferlegt, wenn sich aktuelle Betriebsdaten, die die Zugmaschinengeschwindigkeit und den Zugmaschinenlenkwinkel darstellen, der Instabilitätskurve eines Abstands nähern, der niedriger als ein vorbestimmter Schwellenwert ist.

7. Routenzug nach einem der vorstehenden Ansprüche, wobei die Steuereinheit (40) so konfiguriert ist, dass sie eine Stabilitätskontrolle durch Auferlegen einer oberen Grenze für die Geschwindigkeit der Zugmaschine (11) durchführt, wobei die obere Grenze ansteigt, wenn ein Gesamtgewicht der Vielzahl von Anhängern (12) und der jeweiligen getragenen Lasten (13), das auf der Grundlage der durch die Erfassungseinrichtung (24) erfassten Informationen abgeleitet wird, ansteigt.

8. Routenzug nach einem der vorstehenden Ansprüche, wobei einer oder mehrere der Anhänger (12) kein an Bord des Anhängers montiertes Bremssystem einschließen.

9. Routenzug nach Anspruch 8, wobei die Steuereinheit (40) mit einem Antriebssystem der Zugmaschine (11) gekoppelt ist und so konfiguriert ist, dass sie dieses steuert, wobei die Steuereinheit (40) so konfiguriert ist, dass sie die Begrenzung der Geschwindigkeit der Zugmaschine (11) durch eine Steuerung des Antriebssystems der Zugmaschine auferlegt.

10. Routenzug nach einem der Ansprüche 9-10, wobei die Steuereinheit (40) mit einem Bremssystem (26) der Zugmaschine (11) gekoppelt ist und so konfiguriert ist, dass sie dieses steuert, wobei die Steuereinheit (40) so konfiguriert ist, dass sie die Begrenzung der Geschwindigkeit der Zugmaschine (11) durch Aktivieren des Bremssystems der Zugmaschine auferlegt.

11. Routenzug nach einem der Ansprüche 1-10, wobei die Gewichtseingabeschnittstelle (24) eine Anzeige einschließt; wobei die Steuereinheit (40) so konfiguriert ist, dass sie beim Einschalten der Zugmaschine bewirkt, dass auf der Anzeige eine Benachrichtigung angezeigt wird, die den Benutzer darauf hinweist, dass eine Eingabe von Informationen über ein Gewicht einer von einem oder mehreren der Vielzahl von Anhängern getragenen Last erforderlich ist.

12. Routenzug nach Anspruch 11, wobei, wenn die Steuereinheit (40) das vordefinierte Gesamtgewicht, das in dem Speicher (25) gespeichert ist, als die Informationen, die sich auf ein Gewicht beziehen, erfasst, die Steuereinheit (40) konfiguriert ist, um zu bewirken, dass die Anzeige aufhört, die Benachrichtigung anzuzeigen, die den Benutzer darauf hinweist, dass eine Eingabe von Informationen, die sich auf ein Gewicht einer Last beziehen, die von einem oder mehreren der Vielzahl von Anhängern getragen wird, erforderlich ist.

## Revendications

1. Train de remorqueur (10) comprenant un chariot tracteur (11) et une pluralité de remorques (12) reliées au chariot tracteur (11) de manière articulée pour transporter des charges, incluant :
- un capteur de vitesse (21) pour détecter la vitesse du chariot tracteur,
- un capteur d'angle de braquage (22) pour détecter l'angle de braquage du chariot tracteur,
- des moyens d'acquisition (24, 25) pour acquérir des informations relatives à un poids d'une charge transportée par une ou plusieurs de la pluralité de remorques, et
- une unité de commande (40) configurée pour effectuer une commande de stabilité en imposant une limitation de la vitesse du chariot tracteur (11) sur la base d'une analyse de la vitesse du chariot tracteur détectée par le capteur de vitesse (21), de l'angle de braquage du chariot tracteur détecté par le capteur d'angle de braquage (22) et des informations relatives à un poids acquises par les moyens d'acquisition (24, 25),
**caractérisé en ce que** les moyens d'acquisition incluent une interface d'entrée de poids (24) et sont configurés pour acquérir les informations relatives à un poids en recevant une indication de poids entrée par un utilisateur du chariot tracteur au moyen de l'interface d'entrée de poids (24),
dans lequel l'unité de commande (40) est configurée pour acquérir un poids total prédéfini enregistré dans une mémoire (25) en tant qu'informations relatives à un poids, si l'interface d'entrée de poids (24) ne reçoit pas d'entrée de la part de l'utilisateur concernant le poids après l'expiration d'une temporisation démarrée à la mise en marche du chariot tracteur (11) ou si aucune entrée n'est reçue sur l'interface d'entrée de poids (24) dans le temps compris entre la mise en marche du chariot tracteur et le moment où le chariot tracteur commence à se déplacer.

2. Train de remorqueur (10) selon la revendication 1, dans lequel le chariot tracteur (11) inclut en outre un capteur d'inclinaison (23) pour détecter l'inclinaison du chariot tracteur par rapport à un plan horizontal, dans lequel l'unité de commande (40) est configurée pour effectuer la commande de stabilité en imposant la limitation de la vitesse du chariot tracteur (11) sur la base également de l'inclinaison du chariot tracteur détectée par le capteur d'inclinaison (23).

3. Train de remorqueur (10) selon les revendications 1 ou 2, dans lequel l'unité de commande (40) est en outre configurée pour effectuer la commande de stabilité en imposant une limitation de l'angle de braquage du chariot tracteur.

4. Train de remorqueur (10) selon la revendication 3, dans lequel l'unité de commande (40) est configurée pour imposer la limitation de l'angle de braquage en activant des moyens d'opposition (27) configurés pour générer un couple s'opposant à la rotation d'un volant commandée par un utilisateur ou en activant des moyens pour faire vibrer le volant.

5. Train de remorqueur selon les revendications 1, 2 ou 3, dans lequel l'unité de commande est configurée pour calculer, sur la base des informations relatives à un poids acquises par les moyens d'acquisition (24, 25) et/ou de l'inclinaison détectée par le capteur d'inclinaison (23), une courbe d'instabilité (31, 32) représentant une vitesse maximale du chariot tracteur en fonction d'un angle de braquage actuel du chariot tracteur.

6. Train de remorqueur (10) selon la revendication 5, dans lequel l'unité de commande est configurée pour imposer une limitation de la vitesse du chariot tracteur et/ou de l'angle de braquage du chariot tracteur lorsque des données opérationnelles actuelles représentant la vitesse du chariot tracteur et l'angle de braquage du chariot tracteur s'approchent de la courbe d'instabilité d'une distance inférieure à un seuil prédéterminé.

7. Train de remorqueur selon l'une quelconque des revendications précédentes, dans lequel l'unité de commande (40) est configurée pour effectuer une commande de stabilité en imposant une limite supérieure à la vitesse du chariot tracteur (11), dans lequel la limite supérieure augmente lorsqu'un poids total de la pluralité de remorques (12) et des charges transportées respectives (13), calculé sur la base des informations acquises par les moyens d'acquisition (24), augmente.

8. Train de remorqueur selon l'une quelconque des revendications précédentes, dans lequel une ou plusieurs des remorques (12) n'incluent pas de système de freinage monté à bord de la remorque.

9. Train de remorqueur selon la revendication 8, dans lequel l'unité de commande (40) est couplée à un système d'entraînement du chariot tracteur (11) et configurée pour le commander, dans lequel l'unité de commande (40) est configurée pour imposer la limitation de la vitesse du chariot tracteur (11) au moyen d'une commande du système d'entraînement du chariot tracteur.

10. Train de remorqueur selon l'une quelconque des revendications 9 à 10, dans lequel l'unité de commande (40) est couplée à un système de freinage (26) du chariot tracteur (11) et configurée pour le commander, dans lequel l'unité de commande (40) est configurée pour imposer la limitation de la vitesse du chariot tracteur (11) en activant le système de freinage du chariot tracteur.

11. Train de remorqueur selon l'une quelconque des revendications 1 à 10, dans lequel l'interface d'entrée de poids (24) inclut un écran ; dans lequel l'unité de commande (40) est configurée, lorsque le chariot tracteur est mis en marche, pour amener l'écran à afficher une notification indiquant à l'utilisateur qu'une entrée d'informations relatives à un poids d'une charge transportée par une ou plusieurs de la pluralité de remorques est requise.

12. Train de remorqueur selon la revendication 11, dans lequel, lorsque l'unité de commande (40) acquiert le poids total prédéfini enregistré dans la mémoire (25) en tant qu'informations relatives à un poids, l'unité de commande (40) est configurée pour amener l'écran à cesser d'afficher la notification indiquant à l'utilisateur qu'une entrée d'informations relatives à un poids d'une charge transportée par une ou plusieurs de la pluralité de remorques est requise.
